# DEMANDE DE BREVET EUROPEEN

(11) **EP 1 220 562 A1**
(43) Date de publication de la demande: **03.07.2002**
(21) Numéro de dépôt: 01403273.4
(22) Date de dépôt: 17.12.2001
(51) Int. Cl.: H04Q 7/38

(54) **Procédé pour reporter des informations de capacité d'access radio d'une station mobile, à un réseau de radiocommunications mobiles en mode paquet**

(30) Priorité: 21.12.2000 FR 0016807
(71) Demandeur: Evolium S.A.S., 75008 Paris (FR)
(72) Inventeur: Landais, Bruno, 78220 Viroflay (FR)
(74) Mandataire: El Manouni, Josiane

(57) **Abrégé**

Procédé pour reporter des informations de capacité d'accès radio d'une station mobile, à un réseau de radiocommunications mobiles en mode paquet, ce procédé étant essentiellement caractérisé en ce que :
- le réseau détermine (5), à partir d' informations d'identité de station mobile qui lui sont communiquées (3), s'il a déjà connaissance d'informations de capacité d'accès radio relatives à la station mobile,
- s'il n'a pas déjà connaissance de telles informations, il demande (4) à la station mobile de les lui communiquer.

## Description

La présente invention concerne d'une manière générale les systèmes cellulaires de radiocommunications mobiles.

La présente invention concerne plus particulièrement les services en mode paquet, tels que notamment le GPRS (pour "General Packet Radio Service" en anglais) pour les systèmes de radiocommunications mobiles de type GSM (pour "Global System for Mobile communications" en anglais).

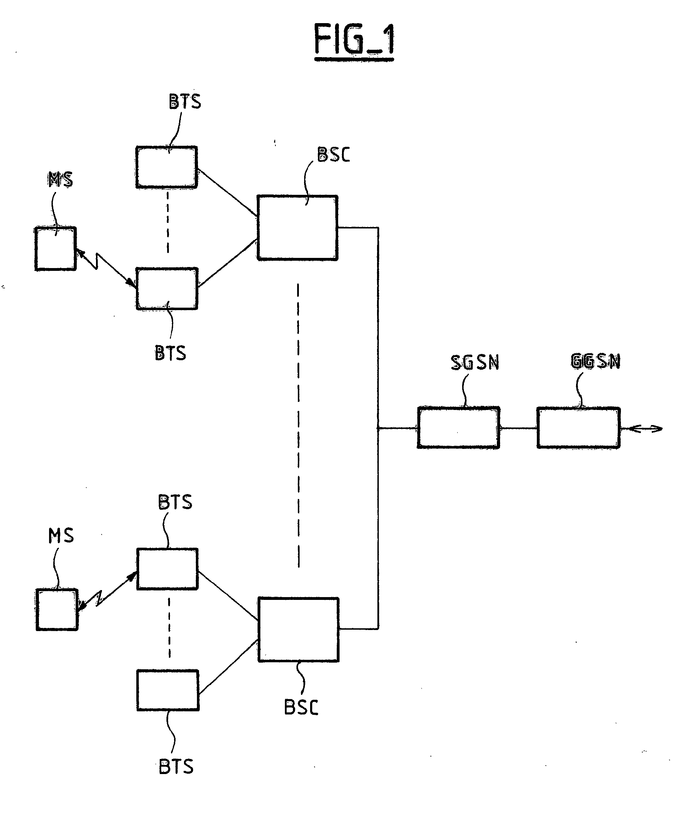

L'architecture des systèmes en mode paquet tels que par exemple les systèmes de type GPRS est rappelée sur la figure 1, elle comporte essentiellement :
- des stations de base ou BTS (pour "Base Transceiver Station" en anglais), en relation avec des stations mobiles ou MS (pour « Mobile Station » en anglais), et des contrôleurs de stations de base ou BSC (pour "Base Station Controller" en anglais), l'ensemble formé par les BTS et BSC étant aussi appelé BSS (pour "Base Station Subsystem" en anglais),
- des entités telles que les entités SGSN (pour "Serving GPRS Support Node" en anglais), en relation d'une part avec le BSS, et d'autre part avec des entités GGSN (pour « Gateway GPRS Support Node » en anglais), elles-mêmes en relation avec des réseaux extérieurs (non illustrés).

L'interface entre MS et BSS est aussi appelée interface « Um », et l'interface entre BSC et SGSN est aussi appelée interface « Gb ».

Le BSS recouvre des fonctionnalités communes aux services en mode circuit et aux services en mode paquet, et des fonctionnalités propres aux services en mode paquet ; ces dernières sont supportées par une entité particulière du BSS, appelée PCU (pour « Packet Control Unit » en anglais), non illustrée spécifiquement sur la figure 1.

On rappelle que pour les services en mode circuit, le BSS est raccordé aux réseaux extérieurs via une entité appelée aussi MSC (pour « Mobile Switching Center » en anglais). L'interface entre BSC et MSC est aussi appelée interface « A ». L'ensemble formé par les MSC (pour les services en mode circuit) et par les SGSN et GGSN (pour les services en mode paquet) est aussi appelé coeur de réseau, ou CN (pour « Core Network » en anglais).

Selon l'architecture en couches utilisée pour décrire ces systèmes, on distingue, sur l'interface « Um » entre MS et BBS:
- une première couche, ou couche physique,
- une deuxième couche, ou couche liaison, elle-même divisée en plusieurs couches: par ordre de niveaux croissants, MAC (pour « Medium Access Control » en anglais), RLC (pour « Radio Link Control » en anglais) et LLC (pour « Logical Link Control » en anglais).

De même, on distingue, sur l'interface « Gb » entre BSS et SGSN:
- une première couche, ou couche physique,
- une deuxième couche, ou couche liaison, elle-même divisée en plusieurs couches : par ordre de niveaux croissants, « Frame Relay » (en anglais), BSSGP (pour « BSS GPRS Protocol» en anglais), et LLC (pour « Logical Link Control » en anglais).

Des trames appelées trames LLC (ou « LLC frames » en anglais) sont formées, dans la couche LLC, à partir d'unités de données de niveau supérieur. Dans les trames LLC ces unités de données sont appelées unités de données LLC-PDU (pour « LLC-Protocol Data Units » en anglais).

Les unités de données LLC-PDU sont ensuite segmentées dans la couche MAC/RLC, de manière à former des blocs appelés blocs de données RLC (ou « RLC data blocks » en anglais). Les blocs de données RLC sont ensuite mis au format requis pour transmission sur l'interface « Um », dans la couche physique.

En outre, dans les couches RLC et LLC sont mises en oeuvre des procédures de re-transmission de données non correctement reçues (blocs de données RLC ou unités de données LLC-PDU selon le cas), selon une technique appelée aussi ARQ (pour "Automatic Repeat reQuest" en anglais). L'état, correct ou non, des blocs ou unités de données reçus est signalé par le récepteur à l'émetteur au moyen de messages dits d'acquittement (ou ACK, pour "ACKnowledgment" en anglais) ou de non-acquittement (ou NACK, pour "Non-ACKnowledgment" en anglais).

En outre, des protocoles de signalisation sont prévus, notamment pour la gestion des ressources radio ou RR (pour « Radio Resource Management» en anglais), la gestion de la mobilité ou MM (pour « Mobility Management» en anglais), la gestion de session ou SM (pour « Session Management» en anglais), le contrôle de lien logique ou LL (pour « Logical Link Control » en anglais), ...etc.

En outre, en mode paquet, une station mobile peut être :
- soit dans un mode dit « packet transfer mode » (en anglais), dans lequel des ressources sont allouées temporairement, lorsque des données sont effectivement à transmettre au cours d'une communication, ces ressources formant un canal virtuel temporaire ou TBF (pour « Temporary Block Flow » en anglais) permettant un transfert de données entre station mobile et réseau, pour un sens de transmission donné,
- soit dans un mode dit « packet idle mode » (en anglais), dans lequel aucun TBF n'est établi.

Par opposition, en mode circuit, le mode dans lequel des ressources sont allouées à une station mobile est appelé « dedicated mode» (en anglais), ces ressources étant alors des ressources dédiées allouées à la station mobile pour la durée de la communication.

En outre, pour l'initialisation d'un transfert de données par une station mobile (ou établissement d'un TBF à l'initiative de la station mobile), il est possible d'utiliser l'une ou l'autre de deux méthodes dites respectivement d'accès en une seule phase (ou « one phase access » en anglais) ou d'accès en deux phases (ou « two phase access » en anglais).

Lors de l'établissement d'un TBF à l'initiative de la station mobile, la station mobile envoie au réseau un message « PACKET CHANNEL REQUEST » sur un canal commun montant ou PRACH (pour « Packet Random Access Channel » en anglais), ou un message « CHANNEL REQUEST » sur un canal commun montant ou RACH (pour « Random Access Channel » en anglais) .

Dans le cas de l'accès en une seule phase le réseau répond par un message « PACKET UPLINK ASSIGNMENT » sur un canal commun descendant ou PAGCH (pour « Packet Access Grant Channel » en anglais), ou par un message « IMMEDIATE ASSIGNMENT » sur un canal commun descendant ou AGCH (pour « Access Grant Channel » en anglais), ce message indiquant directement à la station mobile les ressources, ou canaux PDCH (pour « Packet Data Channel » en anglais) alloués. La station mobile utilise alors ces ressources pour transmettre des données (ou blocs de données RLC) dans le sens montant. En outre, pour permettre au réseau de l'identifier de manière unique, la station mobile ajoute à ces données des informations d'identité de cette station mobile (ou TLLI, pour « Temporary Logical Link Identity » en anglais»). La station mobile continue ensuite de transmettre des données lorsqu'elle reçoit du réseau, en retour, un message d'acquittement auquel sont ajoutées les mêmes informations d'identité identifiant cette station mobile (ces informations d'identité de station mobile étant ainsi destinées à permettre une gestion de la liaison montante, ou une contention d'accès en mode paquet).

Dans le cas de l'accès en deux phases le réseau répond par un message « PACKET UPLINK ASSIGNMENT » sur le canal PAGCH, ou par un message « IMMEDIATE ASSIGNMENT » sur le canal AGCH, ce message indiquant à la station mobile une ressource limitée sur un canal PDCH, qu'elle peut utiliser pour transmettre un message « PACKET RESOURCE REQUEST » contenant une description plus précise des ressources requises, et auquel elle inclut également des informations d'identité de station mobile (pour les mêmes raisons qu'indiqué précédemment).

Pour une description plus détaillée de ces systèmes, on pourra par exemple se référer aux normes correspondantes, publiées par les organismes de normalisation correspondants, notamment au document 3GPP TS 04.60 V8.6.0 (2000-10).

D'une manière générale, pour supporter différents besoins en termes de services dans ces systèmes, il est prévu différents types de stations mobiles, identifiés par des informations correspondantes, appelées aussi informations de « classmark », ou de « radio access capability » (en anglais). Ces informations seront aussi appelées par la suite « informations de capacité d'accès radio ». Ces informations sont en général initialement connues de la station mobile, et nécessitent donc d'être reportées au réseau lorsque cela est nécessaire.

Actuellement, ces différents besoins en termes de service correspondent à des caractéristiques telles que par exemple la capacité de la station mobile à transmettre des données simultanément sur plusieurs intervalles de temps (ou « multi-slot» en anglais), ou encore la capacité de la station mobile à supporter la fonctionnalité EGPRS (pour "Enhanced General Packet Radio Service") permettant de meilleures performances en termes de débit grâce à une modulation de meilleure efficacité spectrale.

Ces différents besoins en termes de services peuvent aussi correspondre au cas d'un réseau dans lequel sont progressivement introduits, dans une infrastructure existante, correspondant à un système tel qu'un système de deuxième génération (en particulier le système GSM précité), de nouveaux moyens d'accès radio à cette infrastructure, correspondant à un système tel qu'un système de troisième génération (en particulier le système UMTS, pour "Universal Mobile Telecommunication System" en anglais), en vue de l'introduction progressive de nouveaux services, en particulier des services de transmission de données à haut débit.

Un tel système comporte ainsi des cellules dans lesquelles lesdits nouveaux services sont disponibles, en l'occurrence des cellules UMTS, et des cellules dans lesquelles lesdits nouveaux services ne sont pas disponibles, en l'occurrence des cellules GSM.

On rappelle que dans un système de type UMTS, les contrôleurs de stations de base (ou RNC , pour « Radio Network Controller » en anglais) sont raccordés au coeur de réseau CN par une interface appelée aussi interface « lu-cs » pour le cas de services en mode circuit (équivalente à l'interface « A » pour un système de type GSM), ou « lu-ps » pour le cas de services en mode paquet (équivalente à l'interface « Gb » pour un système de type GSM). Dans un système comportant des cellules GSM et des cellules UMTS, on peut alors distinguer, en termes d'interface, deux modes appelés respectivement mode « A/Gb », et le mode « lu-cs/lu-ps ».

On rappelle en outre, que, dans une architecture cellulaire, il est nécessaire de transférer les communications de cellule à cellule selon les besoins. Pour les services en mode paquet, on utilise généralement une procédure dite de re-sélection de cellule, et on distingue généralement plusieurs modes de contrôle de re-sélection de cellule, correspondant à des degrés d'autonomie décroissants de la station mobile, ou, ce qui revient au même, à des degrés de contrôle croissants par le réseau. Par exemple, dans le cas du GPRS, comme spécifié dans la norme 3GPP TS 04.60 V8.6.0 (2000-10) publiée par le 3GPP (« 3^{rd} Generation Partnership Project »):
- Suivant un premier mode de contrôle (appelé aussi NC0), la station mobile décide de manière autonome d'effectuer un tel transfert et sélectionne elle-même la cellule cible vers laquelle la communication est à transférer, en tenant compte des résultats de mesures qu'elle effectue.
- Suivant un deuxième mode de contrôle ( appelé aussi NC1), la station mobile peut décider de manière autonome d'effectuer un tel transfert et sélectionner la cellule cible vers laquelle la communication est à transférer, en tenant compte de résultats de mesures qu'elle effectue, et transmet par ailleurs les résultats de ces mesures au réseau.
- Suivant un troisième mode de contrôle (appelé aussi NC2), le réseau décide d'effectuer un tel transfert et sélectionne la cellule cible vers laquelle la communication est à transférer, en tenant compte des résultats de mesures que lui transmet la station mobile .

Dans un système dans lequel différents types de cellules sont prévus, par exemple des cellules GSM et des cellules UMTS, il faut éviter qu'une cellule re-sélectionnée soit une cellule GSM, alors que le service requis nécessiterait une cellule UMTS.

Lorsque la re-sélection de cellule est de type NC0 ou NC1, il n'est pas nécessaire que les informations de capacité d'accès radio correspondantes soient communiquées au réseau, puisque la re-sélection de cellule est effectuée de manière autonome par la station mobile. En revanche, lorsque la re-sélection de cellule est de type NC2, il est nécessaire que les informations de capacité d'accès radio correspondantes soient communiquées par la station mobile au réseau, puisque la re-sélection de cellule n'est pas effectuée de manière autonome par la station mobile. Les informations de capacité d'accès radio correspondantes comportent alors des informations telles que les informations appleées aussi « UMTS classmark informations » (telles que définies notamment dans le document 3G TS 25.331 V3.4.1 (2000-09) publié par le 3GPP).

Les solutions prévues par la norme GSM, pour qu'une station mobile en mode paquet reporte au réseau des informations de capacité d'accès radio, sont actuellement les suivantes, pour le cas du mode « A/Gb ».

Suivant une première solution, des informations de capacité d'accès radio sont reportées par une station mobile au BSS dans le cadre d'une procédure d'établissement d'un TBF (ou « Temporary Block Flow » en anglais), dans le sens montant. Une telle solution est décrite dans le document 3GPP TS 04.60 V8.6.0 (2000-10).

Suivant une première possibilité, correspondant au cas de l'accès en une seule phase, il est prévu que le réseau puisse demander, dans le message « PACKET UPLINK ASSIGNMENT», suite à la réception d'un message « (PACKET) CHANNEL REQUEST », les informations de capacité d'accès radio de la station mobile. La station mobile transmet alors ces informations au réseau dans un message « PACKET RESOURCE REQUEST ».

Suivant une deuxième possibilité, correspondant au cas d'accès en deux phases la station mobile peut utiliser le message « PACKET RESOURCE REQUEST » pour transmettre des informations de capacité d'accès radio.

Suivant une deuxième solution, des informations de capacité d'accès radio sont transmises par une station mobile au SGSN dans le cadre de procédures prévues dans le système pour la gestion de la mobilité, à savoir lorsque la station mobile se connecte initialement au réseau (ou procédure d'attachement, ou « Attach » en anglais), ou ultérieurement dans le cas de mise à jour de localisation (ou « Routing Area Update » en anglais). Suivant le document 3GPP TS 08.18 V8.4.0 (2000-10), il est alors prévu que le BSS puisse requérir du SGSN des informations de capacité d'accès radio ainsi reçues.

La première solution a notamment pour inconvénient de ne pas tenir compte du fait que le BSS peut déjà avoir eu connaissance des informations de capacité d'accès radio pour une station mobile donnée, avant de les demander (première possibilité) ou de les recevoir (deuxième possibilité) de cette station mobile. De telles informations peuvent ainsi être re-demandées inutilement, ce qui a pour inconvénient d'une part de ne pas correspondre à une utilisation efficace des ressources radio, et d'autre part d'introduire inutilement un retard avant de pouvoir commencer un transfert de données ou en d'autres termes de dégrader inutilement la qualité de service.

La deuxième solution a notamment pour inconvénient d'introduire des échanges de données supplémentaires entre SGSN et BSS (puisque l'entité utilisatrice de telles informations est l'entité BSS et non l'entité SGSN), et en outre de nécessiter inutilement de tels échanges dans le cas de station mobile bi-mode (paquet/circuit).

La présente invention a notamment pour but de proposer une nouvelle procédure pour reporter des informations de capacité d'accès radio d'une station mobile, à un réseau de radiocommunications mobiles en mode paquet, destinée notamment à éviter les divers inconvénients précités. La présente invention est notamment applicable au cas de stations mobiles opérant en mode paquet selon le mode dit « A /Gb », et au cas d'informations de capacité d'accès radio comportant des informations dites de « UMTS classmark ».

La présente invention a ainsi pour objet un procédé pour reporter des informations de capacité d'accès radio d'une station mobile, à un réseau de radiocommunications mobiles en mode paquet, ce procédé étant essentiellement caractérisé en ce que :
- le réseau détermine, à partir d'informations d'identité de station mobile qui lui sont communiquées, s'il a déjà connaissance d' informations de capacité d'accès radio relatives à la station mobile,
- s'il n'a pas déjà connaissance de telles informations, il demande à la station mobile de les lui communiquer.

Suivant une autre caractéristique, lesdites informations d'identité de station mobile sont des informations destinées à permettre une gestion de la liaison montante, en mode paquet.

Suivant une autre caractéristique, lesdites informations d'identité de station mobile sont transmises avec des données transmises dans le sens montant.

Suivant une autre caractéristique, le réseau demande à la station mobile , dans un message d'acquittement de données reçues dans le sens montant, de lui communiquer lesdites informations de capacité d'accès radio.

Suivant une autre caractéristique, ledit système est de type GPRS, et ledit message est de type « PACKET UPLINK ACK/NACK ».

Suivant une autre caractéristique, lesdites informations d'identité sont transmises avec une demande d'allocation de ressources pour la transmission de données dans le sens montant.

Suivant une autre caractéristique, le réseau demande à la station mobile, dans un message d'allocation de ressources radio pour le sens montant, de lui communiquer lesdites informations de capacité d'accès radio.

Suivant une autre caractéristique, ledit système est de type GPRS, et ledit message est de type « PACKET UPLINK ASSIGNMENT ».

Suivant une autre caractéristique, lesdites informations d'identité de station mobile ont déjà été communiquées au réseau, dans le cadre d'un transfert de données déjà établi dans le sens descendant.

Suivant une autre caractéristique, le réseau demande à la station mobile, dans un message d'allocation de ressources radio pour le sens montant, de lui communiquer lesdites informations de capacité d'accès radio.

Un autre objet de la présente invention est une entité de réseau de radiocommunications mobiles en mode paquet, cette entité étant essentiellement caractérisée en ce qu 'elle comporte, pour mettre en oeuvre un tel procédé:
- des moyens pour déterminer, à partir d'informations d'identité de station mobile qui lui sont communiquées, si elle a déjà connaissance d' informations de capacité d'accès radio relatives à la station mobile,
- des moyens pour demander à la station mobile de lui communiquer de telles informations, si elle n'en a pas déjà connaissance.

Suivant une autre caractéristique, dans un système de type GPRS, ladite entité est de type PCU (pour « Packet Control Unit » en anglais).

Un autre objet de la présente invention est une station mobile, cette station mobile étant essentiellement caractérisée en ce qu 'elle comporte, pour mettre en oeuvre un tel procédé:
- des moyens pour recevoir une telle demande de communication d'informations de capacité d'accès radio,
- des moyens pour transmettre au réseau de telles informations, en réponse à une telle demande.

D'autres objets et caractéristiques de la présente invention apparaîtront à la lecture de la description suivante d'exemples de réalisation, faite en relation avec les dessins ci-annexés dans lesquels:
- la figure 1 (décrite précédemment) est un schéma destiné à rappeler l'architecture générale d'un système cellulaire de radiocommunications mobiles de type GPRS,
- la figure 2 est un schéma destiné à illustrer un procédé suivant l'invention, suivant un premier mode de réalisation,
- la figure 3 est un schéma destiné à illustrer un procédé suivant l'invention, suivant un deuxième mode de réalisation,
- la figure 4 est un schéma destiné à illustrer un procédé suivant l'invention, suivant un troisième mode de réalisation.

La présente invention a donc pour objet un procédé pour reporter des informations de capacité d'accès radio d'une station mobile, à un réseau de radiocommunications mobiles en mode paquet .

Essentiellement, suivant l'invention:
- le réseau détermine, à partir d'informations d'identité de station mobile qui lui sont communiquées, s'il a déjà connaissance d' informations de capacité d'accès radio relatives à la station mobile,
- s'il n'a pas déjà connaissance de telles informations, il demande à la station mobile de les lui communiquer.

La présente invention sera plus particulièrement décrite, dans ce qui suit, à titre d'exemple pour un système de type GPRS.

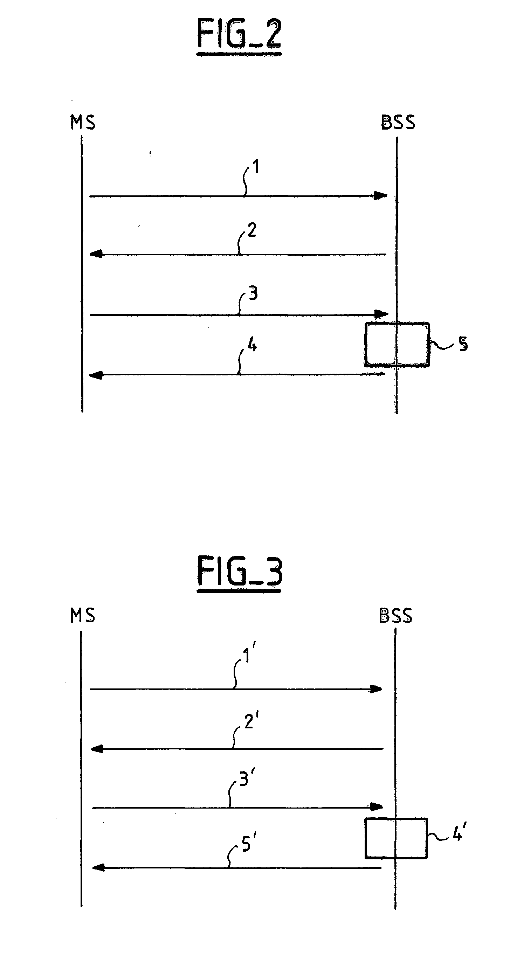

Suivant un premier mode de réalisation, illustré sur la figure 2, l'invention est mise en oeuvre lors de l'établissement d'un TBF (pour « Temporary Block Flow » en anglais) dans le sens montant, à l'initiative de la station mobile, et au moyen de la procédure dite d'accès en une seule phase (ou « one phase access » en anglais).

La station mobile envoie alors au réseau un message « PACKET CHANNEL REQUEST », comme noté en 1, sur un canal commun montant ou PRACH. Le réseau répond alors par un message « PACKET UPLINK ASSIGNMENT », comme noté en 2, sur un canal commun descendant ou PAGCH, ce message indiquant directement à la station mobile les ressources (ou canaux PDCH) allouées. La station mobile utilise alors ces ressources pour transmettre des données (ou blocs de données RLC), comme noté en 3, dans le sens montant. En outre, pour permettre au réseau de l'identifier de manière unique, et comme rappelé précédemment, la station mobile ajoute à ces blocs de données des informations d'identité de station mobile (ou TLLI). L'information TLLI est en l'occurrence ajoutée à la partie en-tête (ou « header » en anglais) des blocs de données RLC. Le réseau, en retour, transmet des messages d'acquittement ou « PACKET UPLINK ACK/NACK », comme noté en 4, auxquels sont ajoutées les mêmes informations d'identité identifiant cette station mobile.

Suivant l'invention, à la réception d'un bloc de données RLC (notamment le premier d'entre eux) , et comme noté en 5, le réseau détermine, à partir des informations d'identité de station mobile qui lui sont ainsi communiquées, s'il a déjà connaissance d' informations de capacité d'accès radio relatives à cette station mobile.

S'il n'a pas déjà connaissance de telles informations, il demande à la station mobile de les lui communiquer. Avantageusement, le réseau fait une telle demande à la station mobile, dans un message d'acquittement de données reçues dans le sens montant « PACKET UPLINK ACK/NACK », comme noté en 4, un champ particulier de ce message étant alors utilisé à cet effet.

Suivant un deuxième mode de réalisation, illustré sur la figure 3, l'invention est mise en oeuvre lors de l'établissement d'un TBF (pour « Temporary Block Flow » en anglais) dans le sens montant à l'initiative de la station mobile, et au moyen de la procédure dite d'accès en deux phases (ou « two phase access » en anglais).

La station mobile envoie alors au réseau un message « PACKET CHANNEL REQUEST » , comme noté en 1', sur un canal commun montant ou PRACH. Le réseau répond alors par un message « PACKET UPLINK ASSIGNMENT », comme noté en 2', sur un canal commun descendant ou PAGCH, ce message allouant un bloc de données RLC dans le sens montant. La station mobile utilise ce bloc pour transmettre un message de demande d'allocation de ressources pour le sens montant « PACKET RESOURCE REQUEST », comme noté en 3', incluant l'identité de la station mobile.

Suivant l'invention, à la réception de ce bloc, et comme noté en 4', le réseau détermine, à partir des informations d'identité de station mobile qui lui sont ainsi communiquées, s'il a déjà connaissance d' informations de capacité d'accès radio relatives à cette station mobile.

S'il n'a pas déjà connaissance de telles informations, il demande à la station mobile de les lui communiquer. Avantageusement, le réseau fait une telle demande à la station mobile, dans un message d'allocation de ressources pour le sens montant « PACKET UPLINK ASSIGNMENT » transmis ensuite à la station mobile, comme noté en 5', un champ particulier de ce message étant alors utilisé à cet effet.

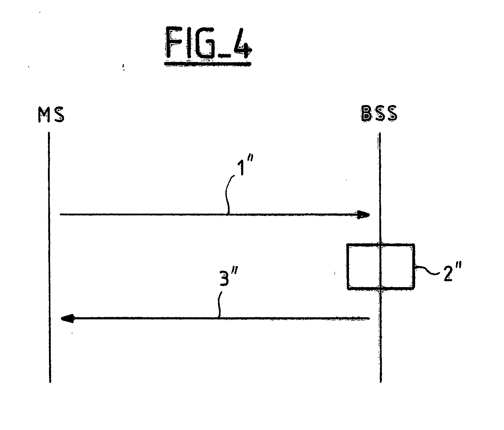

Suivant un troisième mode de réalisation, illustré sur la figure 4, l'invention est mise en oeuvre lors de l'établissement d'un TBF (pour « Temporary Block Flow » en anglais) à l'initiative de la station mobile, dans le sens montant, alors qu'un TBF est déjà établi dans le sens descendant.

La station mobile transmet alors dans un message d'acquittement de données reçues dans le sens descendant « PACKET DOWNLINK ACK/NACK » une requête pour l'établissement d'un TBF dans le sens montant, comme noté en 1" .

Suivant l'invention, à la réception de ce message, et comme noté en 2", le réseau détermine, à partir d'informations d'identité de station mobile qui lui ont déjà été communiquées dans le cadre du transfert de données déjà établi pour le sens descendant, s'il a déjà connaissance d' informations de capacité d'accès radio relatives à cette station mobile.

S'il n'a pas déjà connaissance de telles informations, il demande à la station mobile de les lui communiquer. Avantageusement, le réseau fait une telle demande à la station mobile, dans un message d'allocation de ressources pour le sens montant « PACKET UPLINK ASSIGNMENT » transmis ensuite à la station mobile, comme noté en 3", un champ particulier de ce message étant alors utilisé à cet effet.

On notera que les figures 2 à 4 ne représentent que schématiquement de tels procédés, dans la mesure nécessaire à la compréhension de la présente invention, et sans plus entrer dans le détail des procédés ou protocoles de signalisation, qui peuvent par ailleurs faire appel à des principes classiques dans ces systèmes.

On notera par ailleurs que dans les exemples ainsi décrits, la requête transmise par le réseau à la station mobile, et demandant à cette dernière de lui communiquer lesdites informations de capacité d'accès radio, est transmise par signalisation « dans la bande » (ou « in-band signalling » en anglais) , c'est-à-dire en utilisant des messages existants, auxquels un nouveau champ est alors ajouté. Dans les exemples ainsi décrits, ces messages existants sont les messages « PACKET UPLINK ACK/NACK » et « PACKET UPLINK ASSIGNMENT ». D'autres exemples de messages existants seraient possibles, tels que par exemple « PACKET DOWNLINK ASSIGNMENT » (ou message d'allocation de ressources pour le sens descendant) ou encore « PACKET TIMESLOT RECONFIGURE » (ou message de re-configuration de ressources allouées), ...etc. Ces exemples de signalisation « dans la bande » peuvent ainsi être utilisés lorsqu'un TBF montant ou descendant est déjà établi (c'est-à-dire lorsque la station mobile est dans le mode « packet transfer mode ») ou est en cours d'établissement.

Suivant un autre exemple, la requête transmise par le réseau à la station mobile, et demandant à cette dernière de lui communiquer lesdites informations de capacité d'accès radio, peut être transmise « hors-bande » (ou « out-band signalling » en anglais), c'est-à-dire en créant un nouveau message, spécifiquement pour ce besoin, et que l'on pourrait appeler par exemple, en anglais, « CLASSMARK INQUIRY ». Cet exemple de signalisation « hors-bande » peut être utilisé aussi bien dans le cas de station mobile en mode « packet idle mode » que dans le cas de station mobile en mode « packet transfer mode ».

La réponse de la station mobile à un telle requête peut être transmise dans un nouveau message, créé spécifiquement pour ce besoin et que l'on pourrait appeler par exemple, en anglais, « CLASSMARK CHANGE ». Si la station mobile est en mode « packet transfer mode » elle peut utiliser un bloc sur le canal PACCH pour transmettre ces informations. Si la station mobile est en mode « packet transfer mode » elle pourra, au moyen des procédures existantes, requérir l'allocation d'un bloc dans le sens montant, pour la transmission de ces informations. Eventuellement, si lesdites informations sont trop longues, et si un bloc ne suffit pas, elle pourra répéter une telle opération de requête d'allocation. Alternativement plusieurs blocs PACCH pourront être alloués à la station mobile pour lui permettre de remonter l'intégralité des informations demandées.

On notera par ailleurs que d'une manière générale le réseau peut déjà avoir connaissance desdites informations de capacité d'accès radio, car de telles informations lui ont déjà été reportées, notamment lors de l'établissement d'un TBF, pour le sens montant ou descendant.

On notera par ailleurs que d'une manière générale le réseau peut avoir connaissance desdites informations d'identité de station mobile, notamment car de telles informations lui ont déjà été communiquées, ou lui sont communiquées, lors de l'établissement d'un TBF, pour le sens montant ou descendant.

La présente invention a également pour objet, outre un tel procédé, une entité de réseau cellulaire de radiocommunications mobiles, et une station mobile, comportant des moyens de mise en oeuvre d'un tel procédé.

Ainsi, une entité de réseau cellulaire de radiocommunications mobiles en mode paquet comporte essentiellement, pour mettre en oeuvre un procédé suivant l'invention :
- des moyens pour déterminer, à partir d'informations d'identité de station mobile qui lui sont communiquées, si elle a déjà connaissance d' informations de capacité d'accès radio relatives à la station mobile,
- des moyens pour demander à la station mobile de lui communiquer de telles inforamtions, si elle n'en pas déjà connaissance.

Notamment, dans un système de type GPRS, ladite entité est de type PCU (pour « Packet Control Unit » en anglais).

De même, une station mobile comporte essentiellement, pour mettre en oeuvre un procédé suivant l'invention :
- des moyens pour recevoir une telle demande de communication d'informations de capacité d'accès radio,
- des moyens pour transmettre au réseau de telles informations, en réponse à une telle demande.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour reporter des informations de capacité d'accès radio d'une station mobile, à un réseau de radiocommunications mobiles en mode paquet, **caractérisé en ce que** :
- le réseau détermine, à partir d'informations d'identité de station mobile qui lui sont communiquées, s'il a déjà connaissance d' informations de capacité d'accès radio relatives à la station mobile,
- s'il n'a pas déjà connaissance de telles informations, il demande à la station mobile de les lui communiquer.

2. Procédé selon la revendication 1, **caractérisé en ce que** lesdites informations d'identité de station mobile sont des informations destinées à permettre une gestion de la liaison montante, en mode paquet.

3. Procédé selon la revendication 2, **caractérisé en ce que** lesdites informations d'identité de station mobile sont transmises avec des données transmises dans le sens montant.

4. Procédé selon la revendication 3, **caractérisé en ce que** le réseau demande à la station mobile, dans un message d'acquittement de données reçues dans le sens montant, de lui communiquer lesdites informations de capacité d'accès radio.

5. Procédé selon la revendication 4, **caractérisé en ce que** ledit système est de type GPRS, et ledit message est de type « PACKET UPLINK ACK/NACK ».

6. Procédé selon la revendication 1, **caractérisé en ce que** lesdites informations d'identité de station mobile sont transmises avec une demande d'allocation de ressources pour la transmission de données dans le sens montant.

7. Procédé selon la revendication 6, **caractérisé en ce que**, le réseau demande à la station mobile, dans un message d'allocation de ressources radio pour le sens montant, de lui communiquer lesdites informations de capacité d'accès radio.

8. Procédé selon la revendication 7, **caractérisé en ce que** ledit système est de type GPRS, et ledit message est de type « PACKET UPLINK ASSIGNMENT ».

9. Procédé selon la revendication 1, **caractérisé en ce que**, lesdites informations d'identité de station mobile ont déjà été communiquées au réseau, dans le cadre d'un transfert de données déjà établi dans le sens descendant.

10. Procédé selon la revendication 9, **caractérisé en ce que** le réseau demande à la station mobile, dans un message d'allocation de ressources radio pour le sens montant, de lui communiquer lesdites informations de capacité d'accès radio.

11. Entité de réseau de radiocommunications mobiles en mode paquet, **caractérisée en ce qu** 'elle comporte, pour mettre en oeuvre un procédé selon l'une des revendications 1 à 10:
- des moyens pour déterminer, à partir d'informations d'identité de station mobile qui lui sont communiquées, si elle a déjà connaissance d' informations de capacité d'accès radio relatives à la station mobile,
- si elle n'a pas déjà connaissance de telles informations, des moyens pour demander à la station mobile de les lui communiquer.

12. Entité selon la revendication 11, **caractérisée en ce que**, ledit réseau étant de type GPRS, ladite entité est de type PCU (pour « Packet Control Unit » en anglais).

13. Station mobile, **caractérisée en ce qu'**elle comporte, pour mettre en oeuvre un procédé selon l'une des revendications 1 à 10:
- des moyens pour recevoir une telle demande de communication d'informations de capacité d'accès radio,
- des moyens pour transmettre au réseau de telles informations, en réponse à une telle demande.
